# EUROPÄISCHE PATENTSCHRIFT

(11) **EP 0 935 888 B1**
(45) Veröffentlichungstag und Bekanntmachung des Hinweises auf die Patenterteilung: **18.09.2002**
(21) Anmeldenummer: 97911219.0
(22) Anmeldetag: 14.10.1997
(51) Int. Cl.: H04Q 3/00, H04Q 7/34

(54) **VERFAHREN UND VORRICHTUNG ZUM ÜBERPRÜFEN DES RICHTIGEN UND VOLLSTÄNDIGEN ANLEGENS VON KOMMUNIKATIONSDATENSÄTZEN IN TELEKOMMUNIKATIONSANLAGEN**
METHOD AND DEVICE FOR CHECKING IF DATA RECORDS HAVE BEEN CREATED CORRECLTY AND FULLY IN TELECOMMUNICATION SYSTEMS
PROCEDE ET DISPOSITIF POUR VERIFIER SI DES JEUX DE DONNEES DE TELECOMMUNICATIONS ONT ETE CREES DE MANIERE COMPLETE ET CORRECTE DANS DES SYSTEMES DE TELECOMMUNICATIONS

(30) Priorität: 31.10.1996 DE 19644024
(43) Veröffentlichungstag der Anmeldung: 18.08.1999
(73) Patentinhaber: T-Mobile Deutschland GmbH, 53227 Bonn (DE); Ascom Infrasys AG, CH-4503 Solothurn (CH)
(72) Erfinder: PESCHEL, Dietmar, D-53125 Bonn (DE); ANDERLOHR, Stefan, D-53797 Lohmar (DE); SCHÖNFELD, Mark, D-42781 Haan (DE); JACOT, Jean-Pierre, CH-4535 Hubersdorf (CH); SCHENKER, Martin, CH-4500 Solothurn (CH)
(74) Vertreter: Riebling, Peter, Dr.-Ing.
(86) Internationale Anmeldenummer: EP9705644
(87) Internationale Veröffentlichungsnummer: WO98019469

(56) Entgegenhaltungen:
- EP-A- 0 595 440
- HUSLENDE: "Measuring Quality of Service in Public Telecommunications Networks" ERICSSON REVIEW, Bd. 72, Nr. 1, 1995, STOCKHOLM SE, Seiten 13-21, XP000495060
- LUETHI: "QVoice - die neue Generation von Diagnose-Systemen für zellulare Mobilfunk-Netze" TEC. DAS TECHNISCHE MAGAZIN VON ASCOM., Nr. 3, 1995, BERN CH, Seiten 30-34, XP000557527
- KALL: "The GSM System Simulator" EUROCON 88, 13. - 17.Juni 1988, STOCKHOLM SE, Seiten 478-481, XP000010527

## Beschreibung

Die Erfindung betrifft ein Verfahren und eine Vorrichtung zum Überprüfen des richtigen und vollständigen Anlegens von Kommunikationsdatensätzen in Telekommunikationsanlagen, insbesondere Mobilfunknetzen, einschließlich der Überprüfung der Datenbasis im Abrechnungssystem, welche zur Abrechnung der genutzten Kommunikationsleistung dient.

Ragnar Huslende hat in der Druckschrift ERICSSON Review, Bd. 72, Nr. 1, 1995, Stockholm, SE, Seiten 13-21 eine Möglichkeit des Messens der Qualität in öffentlichen Telekommunikationsnetzwerken beschreiben. Es wird vorgeschlagen, im Telekommunikationsnetz eine Anzahl von Testeinheiten anzuordnen, die sich wie normale Teilnehmereinheiten verhalten und automatisch über das Netz miteinander kommunizieren. Während der Kommunikationsverbindung werden Qualitätsparameter, wie z.B. Signal/Rauschabstand, gemessen, an eine Zentralsstelle übergeben und dort ausgewertet.

Ein ähnliches Verfahren ist auch aus der Zeitschreift TEC, Das technische Magazin von Ascom, 3/95, Bern, CH, Seiten 30-34, in einem Artikel von Heinz Lüthi bekannt geworden. Dort wird ebenfalls vorgeschlagen, in einem Kommunikationsnetz mittels automatisch arbeitender Teststationen Kommunikationsverbindungen, insbesondere Sprachverbindungen, aufzubauen, und die jeweilige Sprachqualität der Testverbindungen auszuwerten und zu beurteilen. Dabei erfolgt die Beurteilung der Sprachqualität durch Einsatz von neuronaler Diagnosetechnik.

Die vorliegende Erfindung befasst sich weniger mit der Überprüfung der Sprachqualität einer Kommunikationsverbindung, sondern vielmehr mit der Überprüfung von Kommunikationsdatensätzen. In jedem Telekommunikationsnetz werden Kommunikationsdatensätze, auch Call Data Records genannt, erzeugt, gespeichert und zur Erstellung der Abrechnungsdateien herangezogen. Z.B. werden in digitalen Mobilfunknetzen diese Kommunikationsdatensätze in den Mobilvermittlungsstellen (MSC: Mobile Switching Center) generiert, gespeichert und an eine Abrechnungszentrale weitergeleitet, in welcher die Abrechnung für alle Mobilfunkteilnehmer gemeinsam vorgenommen wird.

Die Erzeugung der Kommunikationsdatensätze in den Vermittlungsstellen erfolgt rein softwaretechnisch und wird über entsprechende Software-Parameter gesteuert. Durch Fehler in der Software und/oder auch Hardware und/oder nicht korrekt eingestellten Softwareparametern können Störungen beim Anlegen der Kommunikationsdatensätze auftreten, so daß die Kommunikationsdatensätze unvollständig, fehlerhaft oder überhaupt nicht erzeugt werden. Treten Fehler auf, so werden diese meist sehr spät erkannt, weil bisher die Überprüfung der Kommunikationsdatensätze auf Korrektheit nur stichprobenartig, nur für Teile des Telekommunikationsnetzes und mit sehr hohem manuellem Aufwand möglich war.

Es ist im Interesse des Kunden und des Netzbetreibers, daß ein korrektes Anlegen der Kommunikationsdatensätze und eine korrekte Abrechnung stattfindet.

Aufgabe der Erfindung ist es daher, ein Verfahren und eine Vorrichtung zum Überprüfen des richtigen und vollständigen Anlegens von Kommunikationsdatensätzen in einer oder interkommunikativ in mehreren Telekommunikationsanlagen vorzuschlagen, welches ein korrektes Anlegen von Kommunikationsdatensätzen permanent und automatisch überprüft.

Gelöst wird diese Aufgabe durch ein Verfahren gemäß der technischen Lehre des Patentanspruchs 1 und durch eine Vorrichtung gemäß des Patentanspruchs 23.

Wesentliches Merkmal der Erfindung ist, daß durch ein automatisches Prüfsystem am Kundenverhalten orientierte oder durch den Netzbetreiber vorgegebene Kommunikationsverbindungen in dem zu prüfenden Telekommunikationsnetz durchgeführt werden, wobei in der anrufenden wie auch der angerufenen Station die Kommunikationsparameter unabhängig voneinander und unabhängig vom Netz aufgezeichnet werden. Die vom Telekommunikationsnetz selbst aufgezeichneten Kommunikationsdatensätze und Abrechnungsdaten werden anschließend anhand der vom Prüfsystem aufgezeichneten Bezugsdaten verifiziert. Das Besondere dabei ist, daß das System die zur Verifikation erforderlichen Bezugsdaten selbst erstellt. Diese Bezugsdaten sind 100% qualitativ überprüfte, reale Kommunikationsdatensatz-Paare . Die Überprüfung umfaßt alle abrechnungsrelevanten Parameter, dies sind u.a.:
Datum,
Uhrzeit des Kommunikationsbeginns, -endes,
Kommunikationsdauer
Kommunikationsort, -ursprung
Kommunikationsziel/r Zielrufnummer
genutzter Telekommunikations-Dienst

Die Überprüfung des Telekommunikationsnetzes erfolgt im Wirkbetrieb, d.h. die Überprüfung des korrekten Anlegens von Kommunikationsdatensätzen erfolgt unter Betriebsbedingungen. Es sind alle Elemente des Telekommunikationsnetzes eingeschlossen, von der Kundenschnittstelle, dem Telekommunikations-Endgerät bis hin zur Datenbasis im Abrechnungssystem der Telekommunikationsanlage, welche (zu Abrechnungszwecken) alle abrechnungsrelevanten Kommunikationsdatensätze beinhaltet. Das Überprüfen von einzelnen Segmenten des Telekommuniktionsnetzes ist ebenfalls möglich.
Das Verfahren soll folgende Funktionen erfüllen:
- Verifikation von Telekommunikationsverbindungen
   Mittels des Prüfsystems kann nachgewiesen werden, daß eine entsprechende Telekommunikationsverbindung bestanden hat. Die Verbindungsparameter werden sowohl beim Anrufenden als auch beim Angerufenen aufgezeichnet, und es wird geprüft, ob im Telekommunikationsnetz selbst ein entsprechender Kommunikationsdatensatz über diese Verbindung angelegt wurde. Es werden sowohl End to End-Kommunikationsverbindungen (Kundenschnittstelle - Kundenschnittstelle) wie auch solche zwischen beliebigen Teilsegmenten des Kommunikationssystems (Kundenschnittstelle - Netzbetreiberstelle bzw. Netzbetreiberschnittstelle -Netzbetreiberschnittstelle) geprüft.
- Verifikation von Kommunikationsdatensätzen
   Die durch das Prüfsystem erzeugten Kommunikationsdatensätze, im folgenden auch als Bezugsdatensätze bezeichnet, werden mit den vom elekommunikationsnetz erzeugten Kommunikationsdatensätzen verglichen.
- Verifikation der Nutzungsmöglichkeit der Telekommunikationsverbindung
   Mittels des Prüfsystems wird ermittelt, in welchem Umfang eine Telekommunikationsverbindung nutzbar war. Während der Prüfverbindung werden vom Anrufenden wie auch Angerufenen Prüfinformationen zur Gegenstation übertragen. Anhand der empfangenen Prüfinformationen wird vom Prüfsystem die Nutzung der Telekommunikationsverbindung ermittelt.

Der Vorteil des erfindungsgemäßen Systems liegt darin, daß nun automatisch und permanent eine Überprüfung der Kommunikationsdatensätze durchgeführt werden kann. Die Überprüfung kann sich über ein oder mehrere Telekommunikationsnetze erstrecken.
Weiterhin ist es möglich, anhand der aufgezeichneten Netzsignalisierungsdaten für fehlerhafte Kommunikationsdatensätze eine ursachenorientierte Fehleranalyse durchzuführen.

Nachfolgend wird das Verfahren und die Vorrichtung am Beispiel eines Mobilfunknetzes näher erläutert. Das Verfahren umfaßt im wesentlichen 5 Prozeßbereiche:
1. Erstellen der kundengerechten oder netzbetreiberorientierten Prüfszenarien für die Kommunikationsdatensätze,
2. Fertigen von Bezugsdatensätzen,
3. Fertigen von Kommunikationsdatensätzen des Telekommunikationssystems,
4. Überprüfen der Kommunikationsdatensätze des Telekommunikationssystems anhand der Bezugsdatensätze und Überprüfen der Nutzungsmöglichkeit der Tele kommunikationsverbindung,
5. Abwandeln der kundengerechten oder netzbetreiberorientierten Komunikationsdatensatz-Prüfszenarien anhand der Fehlerindizien und Fehler-/Ursachenanalyse der fehlerhaften Kommunikationsdatensätze.

### 1. Erstellen von kundengerechten oder netzbetreiberorientierten Prüfszenarien für die Kommunikationsdatensätze:

Damit die Überprüfung der Kommunikationsdatensätze des Mobilfunknetzes soweit wie nur möglich den Leistungsumfang abdeckt, wie ihn auch Kunden nutzen, muß ein Prüfszenario aufgesetzt werden, das dem Kundenverhalten gleicht. Deshalb wird aus den von allen Kunden erzeugten Kommunikationsdatensätzen des Mobilfunk-Wirknetzes - mit sowie auch ohne Abrechnungs-Relevanz- ein statistisch repräsentatives, anonymisiertes Kunden-Kommunikationsdatensatz-Profil von z.B. 10000 Datensätzen erzeugt. Aus diesen 10000 Datensätzen werden die Prüfszenarien für die Kommunikationsdatensätze nach folgendem Verfahren generiert:

Die 10.000 Datensätze werden chronologisch sortiert.
Es wird ein Prüffile (Beginnzeit t₁, Endezeit t_{Ende}) definiert. Im Kunden-Kommunikationsdatensatz-Profil wird ein Datensatz mit dieser vorgegebenen Beginnzeit t₁, z.B. Dienstag, 08.00 Uhr, gesucht.
Die Parameter dieses Kommunikationsdatensatzes (z. B. Kommunikationsbeginn, Kommunikationsdauer, Kommunikationsdienst, Kommunikationszielbereich, Kommunikationsursprungsbereich) werden als Datensatz 1 ins Prüffile übernommen.
Aus der Gesprächsdauer t des Datensatzes 1, der Systemzeit t_{System} und t₁ wird der Beginnzeitpunkt t₂ des zweiten Datensatzes ermittelt.
Im Kunden-Kommunikationsdatensatz-Profil wird nun ein Datensatz mit dem Beginnzeitpunkt t₂ gesucht.
Die Parameter des so ausgewählten Datensatzes werden wiederum als Datensatz 2 ins Prüffile übernommen. Dies wird so oft wiederholt, bis das gewünschte Prüfpaket erstellt ist bzw. bis zum Erreichen des definierten Endzeitpunktes t_{Ende}.

Mit diesem Verfahren wird ein kundengerechtes Prüfprofil erstellt, das quasi einem kumulierten "echten" Kundenverhalten entspricht. Da ein solches Prüfprofil permanent; z.B. täglich oder wöchentlich, neu erstellt werden kann, wirken sich Veränderungen im Kundenverhalten somit direkt auf das Prüfprofil aus, da stets reelle Kommunikationsdatensätze für das Kunden-Kommunikationsdatensatz-Profil herangezogen werden.
Neben dem Prüfpaket mit kundenorientierten Kommunikationsdatensätzen können auch Prüfpakete mit netzbetreiberorientierten Kommunikationsdatensätzen erstellt werden. Bei den netzbetreiberorientierten Kommunikationsdatensätzen werden die Kommunikationsparameter vom Netzbetreiber frei bestimmt. Die Prüfpakete können auch gemischt - aus kundenund netzbetreiberorientierten Kommunikationsdatensätzen - gebildet werden.

### 2. Fertigen von Bezugsdatensätzen

Um eine Qualitätsaussage über die komplette Kommunikationsdaten- und abrechnungsrelevante Produktionskette eines Telekommunikationsnetzes/-system treffen zu können, müssen im Telekommunikationssystem angelegte Kommunikationsdatensätze auf Vollständigkeit und Exaktheit geprüft werden. Vom Kunden geführte Gespräche können hierzu nicht herangezogen werden. Dem stehen zum einen die Datenschutzbestimmmungen entgegen, zum anderen - und dies ist ein wesentlicher Ungenauigkeitsfaktor bei der Qualitätsbetrachtung - stehen keine Ursprungsdaten zur Verfügung; was hat der Kunden tatsächlich an seinem Endgerät eingegeben und wann, wie lange, wohin etc.

Um die Abrechnungsdaten am Ende der Produktionskette eindeutig bewerten zu können, werden Bezugsdatensätze erzeugt. Dies geschieht folgendermaßen:

Von einer systemeigenen Sendestation werden nach dem unter 1. definierten und fest vorgegebenen Prüfszenario über das zu prüfende Telekommunikationsnetz automatisch Verbindungen zu einer systemeigenenen Antwortstation aufgebaut und nach bestimmten, im Prüffile definierten Verbindungsdauern wieder abgebaut. Während der Verbindung werden von der Sende- und Antwortstation Prüfinformationen ausgetauscht und von beiden Stationen deren Empfang bewertet und protokolliert.

Die Sendestation sowie die Antwortstation können stationär wie auch mobil betrieben werden.
In beiden Stationen, der Sendestation wie auch der Antwortstation, werden unabhängig voneinander entsprechend den tatsächlichen Verbindungsparametern Kommunikations
datensätze erzeugt und abgespeichert. Weiterhin werden in der Sende- bzw. Antwortstation die mit dem Telekommunikationssystem ausgetauschten Signalisierungsdaten (z. B. Layer 2 und Layer 3) in Logfiles protokolliert. Diese Signalisierungsdaten sowie die ebenfalls in Logfiles protokollierten Prüfergebnisse aus dem Austausch der Prüfinformationen werden bedarfsweise (im Fehler/Ursachenanalyse-Fall) vom Managementsystem abgefordert. Eine Zusammenfassung der Prüfergebnisse jeder Einzelverbindung wird von der Sende- wie auch Antwortstation als Qualitätsparameter im Kommunikationsdatensatz eingefügt.
Die Kommunikationsdatensätze werden anschließend in ein zentral eingerichtetes Managementsystem übertragen, einander zugeordnet und miteinander verglichen. Nur 100% in den Kommunikationsparametern übereinstimmende Kommunikationsdatensätze werden als Bezugsdatensätze zum späteren Verifizieren der vom Netz erzeugten Kommunikationsdatensätze weiterverwendet. Die fehlerhaften Datensätze werden in Dateien gespeichert und einer ursachenorientierten automatisierten bzw. manuellen Fehleranalyse zugeführt. Mit diesem Verfahren werden Bezugsdatensätze zum Überprüfen der Kommunikationsdaten des Telekommunikationssystems erzeugt, die
auf tatsächlich geführten Verbindungen beruhen,
100% vollständig und exakt sind und
von denen die Kommunikationsparameter eindeutig bekannt sind.

### 3. Fertigen von Kommunikationsdatensätzen des Telekommunikationssystems

Durch die Sendestation werden Verbindungen über das Mobilfunknetz zur Antwortstation aufgebaut. Die in den Vermittlungsstellen (MSC) angelegten, netzeigenen Kommunikationsdatensätze werden zur zentralen Abrechnungszentrale (DPPS: Data-Post-Processing-System) übertragen. Die Kommunikationsdatensätze stehen dort in definiertem Format zur Weiterleitung an das Managementsystem zur Verfügung.

### 4. Überprüfen der Kommunikationsdatensätze des Telekommunikationssystems anhand der Bezugsdatensätze und Überprüfen der Nutzungsmöglichkeit der Telekommunikationsverbindung:

Das Überprüfen der Kommunikationsdatensätze des Telekommunikationssystems anhand der Bezugsdatensätze wird im Managementsystem vorgenommen. Die Kommunikationsdatensätze aus der Abrechnungszentrale werden hierzu an das Managementsystem übertragen, wo sie den im Managementsystem vorhandenen
Bezugsdatensatzpaaren (s. Abschnitt 2 "Fertigen von Bezugsdatensätzen") zugeordnet und mit diesen auf Übereinstimmung ihrer Kommunikationsparameter verglichen werden. Stimmen die Kommunikationsdatensätze nicht mit den Bezugsdatensatzpaaren überein, so werden sie in Dateien gespeichert, die einer automatischen und manuellen Fehleranalyse zugeführt werden. In der automatischen Fehleranalyse werden die Datensätze in Fehlergruppen mit gleichen Fehlerbildern aufgeteilt und in Fehlersammler abgelegt. Die Datensätze einzelner Fehlersammler werden in einer 2. Stufe einer manuellen Fehleranalyse unterzogen.

### 5. Abwandeln der kundengerechten oder netzbetreiberorientierten Kommunikationsdatensatz-Prüfszenarien anhand der Fehlerindizien und Fehler/Ursachenanalyse der fehlerhaften Kommunikationsdatensätze.

Anhand der in den Fehlersammlern abgelegten Datensätze werden die Prüfszenarien für die Kommunikationsdatensätze des Telekommunikationssystems ergänzt bzw. abgeändert.
Es werden nun konzentriert Prüffiles erstellt, die in ihren Parametern den Auftragsfiles entsprechen, die zu den Fehlern beim Prüfen der Kommunikationsdatensätze des Telekommunikationsnetzes geführt haben. Hierdurch wird die Wahrscheinlichkeit für das Auftreten zusätzlicher Indizien zur Fehlererkennung und -beseitigung gezielt erhöht.
Zur Fehler-/Ursachenanalyse bzw. -Erkennung werden die fehlerhaften Kommunikationsdatensätze sowie die zugehörigen, aus den Sende/-Antwortstationen und den Mobilfunkeinrichtungen protokollierten Signalisierungsund Verbindungsdaten sowie die protokollierten Ergebnisse aus dem Prüfinformationsaustausch zwischen den Stationen dem Managementsystem zugeführt und in diesem ausgewertet.

Im folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor. Es zeigt:
- Figur 1: Prinzipieller Prüfaufbau gemäß Erfindung
- Figur 2: Erstellen von kundengerechten Auftragsfiles der Kommunikationsdatensätze
- Figur 3: Index-Prüfung zwischen Auftragsfile und Kommunikationsdatensatz der Sendestation KDSs
- Figur 4: Bildung von Bezugsdatensatzpaare
- Figur 5: Verifikation der Kommunikationsdatensätze des Abrechnungssystems des Telekommunikationsnetzes
- Figur 6: Qualitätsbewertung der Nutzung der Telekommunikationsverbindung
- Figur 7: Analyse der fehlerhaften oder unvollständigen Kommunikationsdatensätze
- Figur 8: Ablaufdiagramm der Qualitätsprüfung der Kommunikationsdatensätze

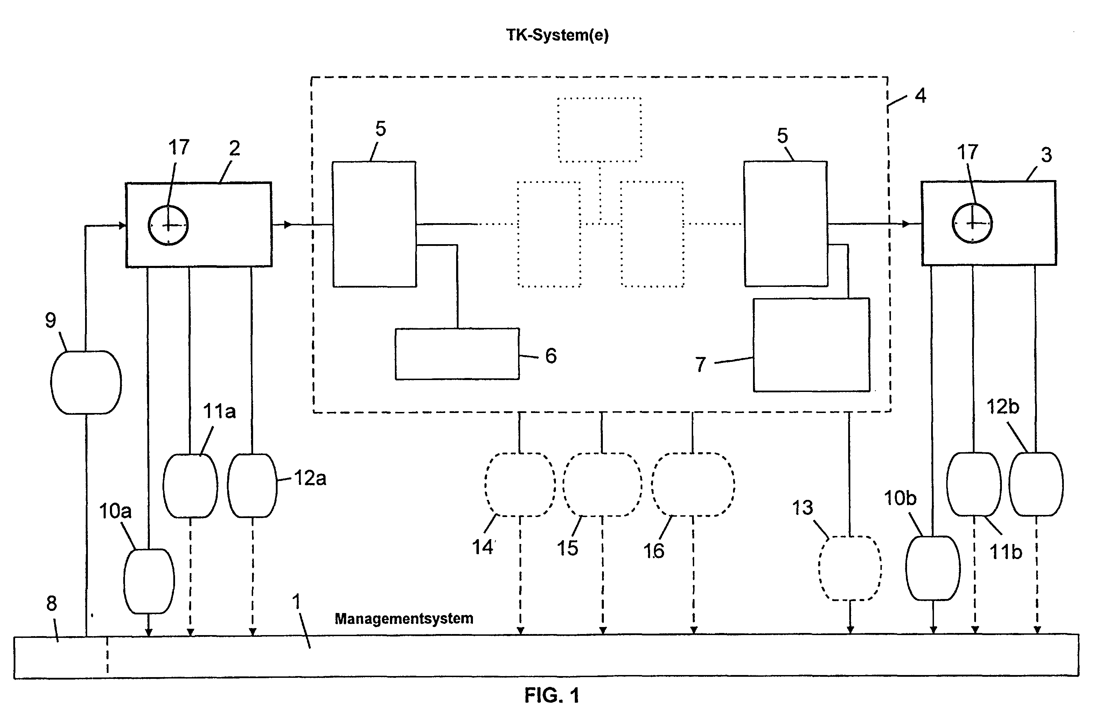

**Figur 1** gibt eine Übersicht über den prinzipiellen Prüfaufbau.
Dargestellt ist das Prüfsystem, bestehend aus Managementsystem 1, Sendestation 2 und Antwortstation 3, sowie dem zu prüfenden Telekommunikationssystem 4. Das Telekommunikationssystem 4 kann aus einem bis mehreren Telekommunikationsanlagen TK₁-TKₙ 5 oder -netzen mit Einrichtungen wie z.B. Routingtabellen 6 und einen Abrechnungssystem 7 bestehen.

Das Managementsystem 1 erstellt aus den generierten Prüffiles 8 einen Prüfblock und sendet diesen als Auftragsfile 9 an die Sendestation 2 (z.B. über GSM oder ISDN). Die Prüf-/Auftragsfiles 8,9 enthalten u.a. Informationen zu:
Rufnummer der Sendestation, Rufnummer der Antwortstation, Datum, Kommunikationsbeginn, -ende bzw. -dauer, Kommunikationsdienst, Prüfmodus, Identifikationsindex.

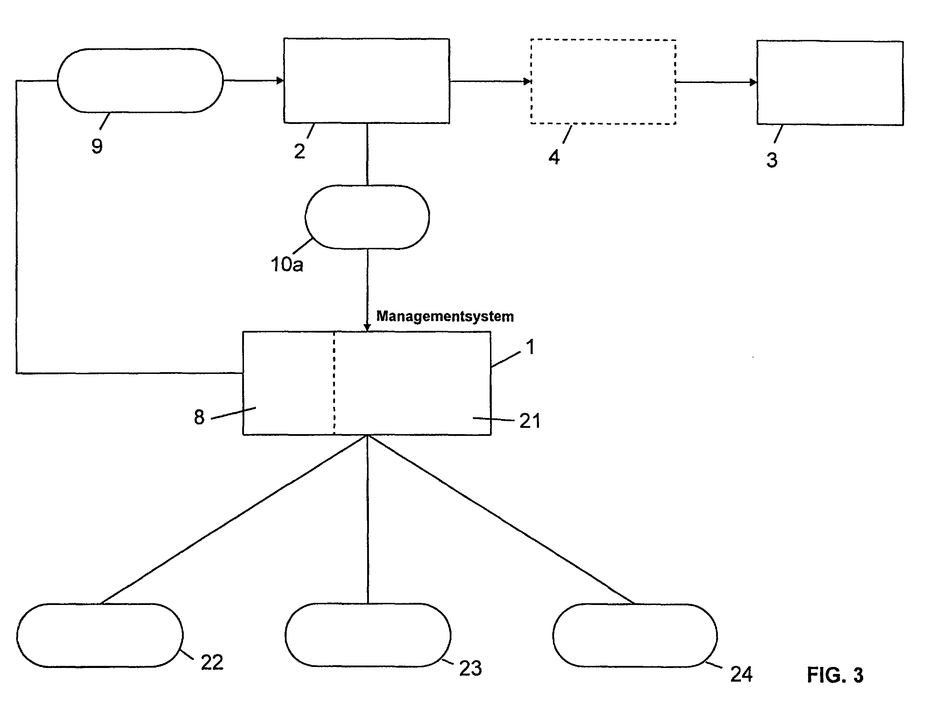

Die Sendestation 2 arbeitet das Auftragsfile 9 ab, indem sie Kommunikationen zu der im File definierten Antwortstation 3 und Kommunikationsparametern aufbaut. Die daraus resultierenden Einzelheiten werden in den Figuren 3 bis 8 näher beschrieben.

Kommunikationsdatensätze (KDS) 10a,10b, Signalisierungslogfiles 11a, 11b sowie Prüfinformationslogfiles 12a, 12b werden während der Kommunikationsverbindung in der Sende- 2 wie auch Antwortstation 3 aufgezeichnet. Im Telekommunikationssystem 4 werden ebenfalls an diversen Einrichtungen Kommunikationsdatensätze 13, 14, Verbindungsdatensätze 15, Routingprotokolle 16 etc. gespeichert. Die im Telekommunikationssystem 4 und in der Sende- 2 und Antwortstation 3 aufgezeichneten Datensätze 10, 13, Logfiles 11, 12, Protokolle 16 etc. werden zum Managementsystem 1 übertragen bzw. von diesem im Bedarfsfall abgefordert (z.B. über GSM oder ISDN), dort einander zugeordnet, verglichen und fehlerhafte Datensätze anhand der Logfiles und Protokolle analysiert.

Die Sendestation 2 sowie die Antwortstation 3 werden mittels eines Zeitgebers 17 (z. B. DCF77) synchronisiert. Beide Stationen 2, 3 können z. B. Mobilstation oder Feststation sein.

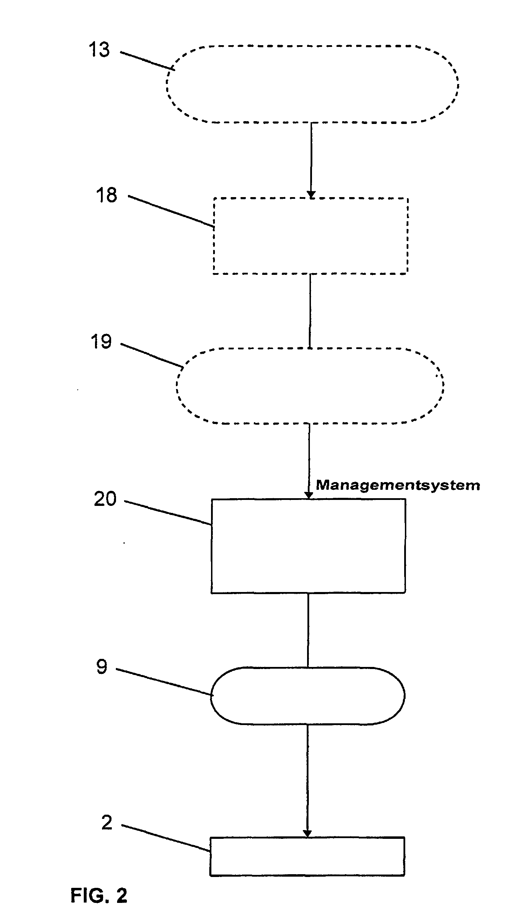

**Figur 2** erläutert die Auftragsdefinition, d.h. die Erstellung des Auftragsfiles 9 für die Sendestation.
Echte Kunden-Kommunikationsdatensätze 13 werden aus der Datenbank des Telekommunikationssystems 4 (z.B. Kommunikationsdatensätze des Abrechnungssystems KDS_{ARS}) nach einem statistischen Auswahlverfahren ausgelesen z.B. indem die KDS_{ARS} nach Datum und Kommunikationsbeginn sortiert werden und anschließend jeder 10.000 ste KDS_{ARS} anonymisiert kopiert wird.

Im nächsten Schritt wird das so genommene repräsentative Konzentrat an Kommunikationsdatensätzen 13 dem Managementsystem 1 zugeführt.

Im Managementsystem 1 werden Prüffiles 20 generiert, die aus Kommunikationsaufträgen bestehen, die gleiche Kommunikationsparameter z.B. Uhrzeit des Kommunikationsbeginns, -endes bzw. Kommunikationsdauer, Kommunikationsort (z.B. Ursprungszelle im Funknetz),
Kommunikationsursprungs/-zielbereich (z.B. Funknetz, Festnetz, Nahbereich, Fernbereich) und Kommunikationsdienst haben, wie die "echten" Kundenkommunikationsdatensätze. Dem Prüffile 20 werden noch System- bzw. prüfspezifische Parameter zugefügt z.B. Zieladresse der Sendestation 2, Prüfmodus, Identifikationsindex und unter optimaler Auslastung der dem Prüfsystem zur Verfügung stehenden Sende- 2 und Antwortstationen 3 kollisionsfrei zu Prüfblöcken zusammengefaßt.
Anschließend werden die Prüfblöcke als Auftragsfiles 9 an die Sendestationen 2 verteilt (Übertragung z.B. per GSM oder ISDN).

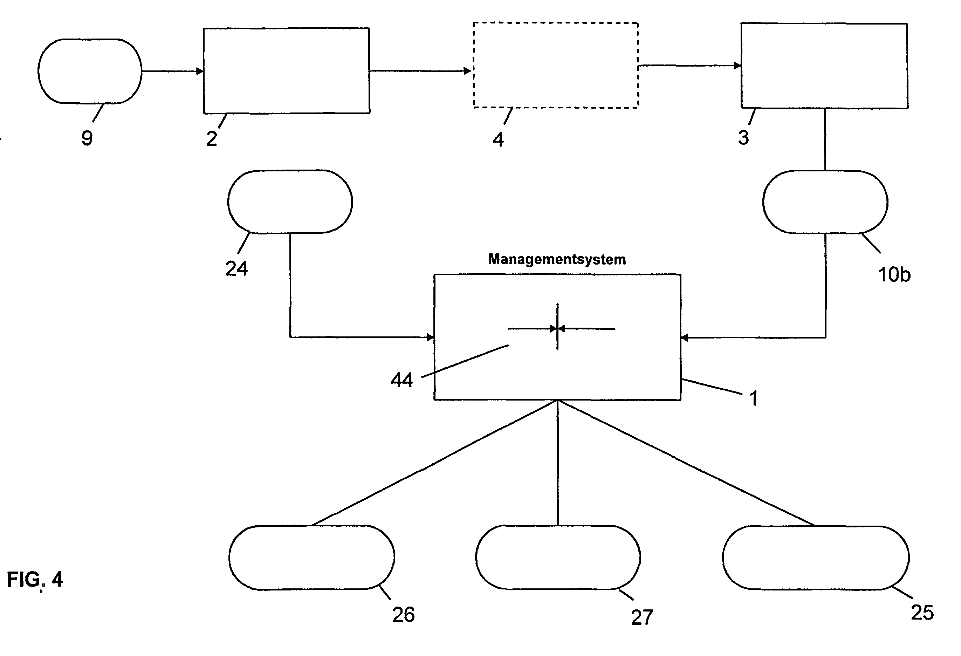

In der Sendestation 2 wird das Auftragsfile 9 empfangen, abgespeichert und gemäß der definierten Kommunikations- und Prüfparameter ausgeführt (Einzelheiten hierzu siehe Fig. 3 und 4).

**Figur 3** zeigt die Index-Prüfung 21 zwischen dem Prüffile 8 und dem Kommunikationsdatensatz 10a der Sendestation 2.
In der Sendestation 2 werden die von dem Managementsystem 1 erhaltenen Prüffiles 8 gemäß der darin definierten Parameter ausgeführt. Hierzu wird von der Sendestation 2 zu der vorgegebenen Zeit eine definierte Kommunikationsverbindung über das Telekommunikationssystem 4, TK-System, zur ebenfalls vorgegebenen Antwortstation 3 aufgebaut.
Nach der im Prüffile 8 definierten Kommunikationsdauer wird die Verbindung zeitgenau abgebaut. Die Verbindung erfolgt maschinengesteuert, d. h. Sendeund. Antwortstation 2, 3 enthalten einen Rechner, der den Verbindungsaufbau/abbau steuert und protokolliert. Über die geführte Verbindung wird ein Kommunikationsdatensatz 10a, 10b in der Sende- 2 wie auch Antwortstation 3 angelegt, abgespeichert und in Prüfpausen an das Managementsystem 1 gesendet. Zur eindeutigen Identifikation wird der Index des Auftragsfile 9 (z. B. Rufnummer der Sendestation, Datum und lfd. Nr.) von der Sendestation 2 in den Kommunikationsdatensatz 10a (KDS_{S}) übertragen.
Weiterhin erhält der Kommunikationsdatensatz 10a (KDS_{S}) u.a. Rufnummer der Sende-/Antwortstation, Datum, Kommunikationsbeginn/-ende bzw.. -dauer, Kommunikationsdienst, Prüfmodus, Index und Qualitätsparameter der Verbindung sowie einige netzspezifizierte Daten (Zellidentifikation, Netzidentifikation etc.).
Im Managementsystem 1 werden der von der Sendestation 2 angelegte und an das Managementsystem 1 übertragene Kommunikationsdatensatz 10a (KDS_{S}) und das Auftragsfile 9 einer automatisierten Zuordnung und Prüfung auf Übereinstimmung ihrer Indizes (21) unterzogen.

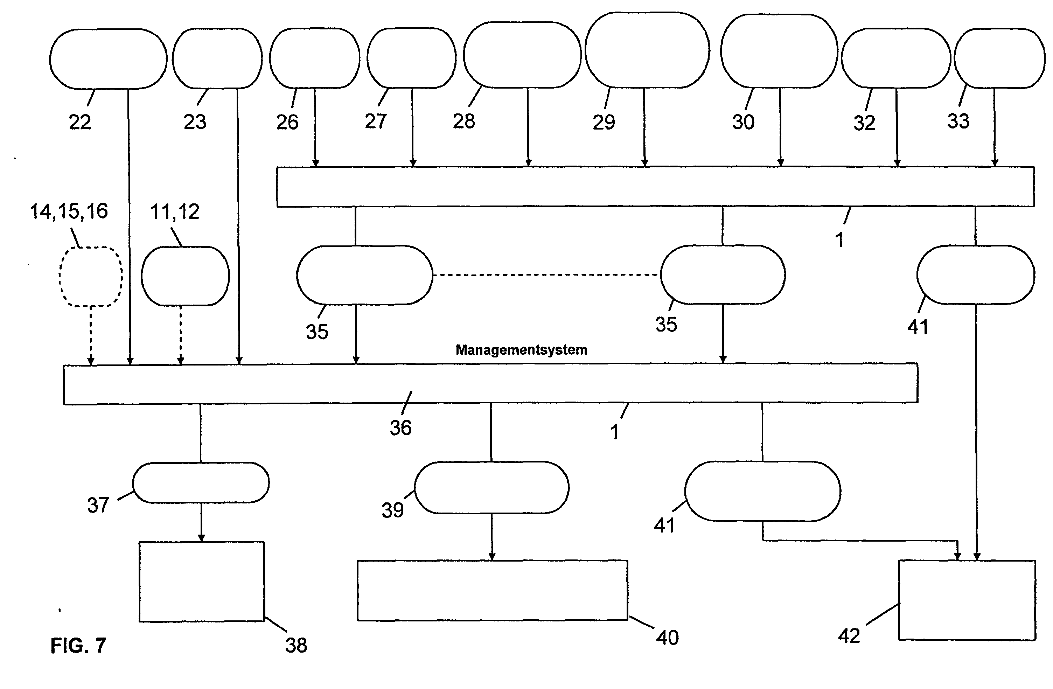

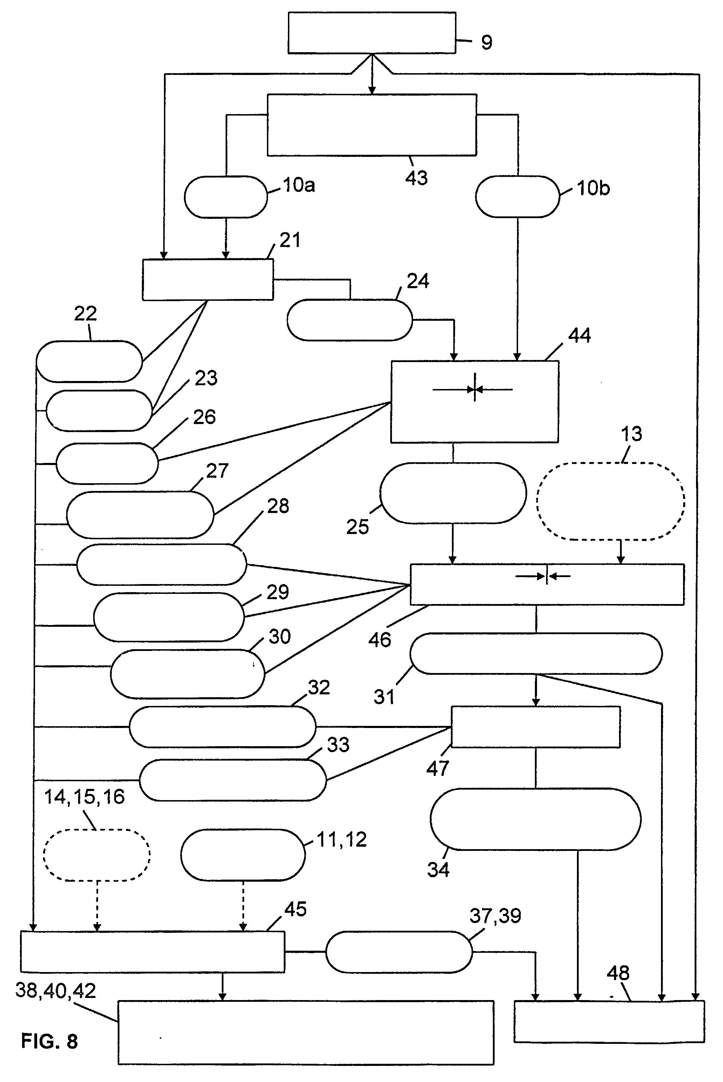

Das Ergebnis dieser Prüfung sind 3 Datenarten
- Auftrag ohne KDS_{S} (22), und
- KDS_{S} ohne Auftrag (23),
die einer weiteren Fehleranalyse im Managementsystem 1 zugeführt werden (s. Figur 7 und 8) und "KDS_{S} gemäß Auftrag" (24), die zur weiteren Billingverifikation verwendet werden (s. Figur 4).

**Figur 4** zeigt die Bildung von Bezugsdatensatzpaaren (25).
Dabei werden aus den gemäß Figur 3 ausgewählten "KDS_{S} gemäß Auftrag" (24) und den Kommunikationsdatensätzen 10b der Antwortstation 3 (KDS_{A}) Kommunikationsdatensatzpaare KDS_{S}/ KDS_{A} gebildet.
In der Antwortstation 3 werden nach dem Prinzip wie in der Sendestation 2 für jede Kommunikationsbeziehung ein Kommunikationsdatensatz 10b angelegt und gespeichert. Der Aufbau sowie der Inhalt der Kommunikationsdatensätze 10a, 10b der Sende- 2 und Antwortstation 3 sind gleich. Wie es für die Sendestation 2 gilt sendet auch die Antwortstation 3 in Prüfpausen ( werden vom Managementsystem zentral vorbestimmt) ihre Kommunikationsdatensätze 10b an das Managementsystem 1. Die Datenübertragung erfolgt wie bei der Sendestation 2, z. B. über das zu prüfende Telekommmunikationsnetz 4 (z. B. GSM) oder ein anderes Netz (z. B. ISDN).
Im Managementsystem 1 werden die Kommunikationsdatensätze 10a, 10b automatisiert selektiert, zugeordnet und verglichen, s. Pos. 44.
Dies erfolgt im einfachsten Fall z. B. derart, daß die Datensätze nach Datum und Uhrzeit des Kommunikationsbeginns sortiert werden. Anschließend werden darin übereinstimmende Datensätze hinsichtlich der enthaltenen Rufnummer der Sende-/Antwortstation verglichen.

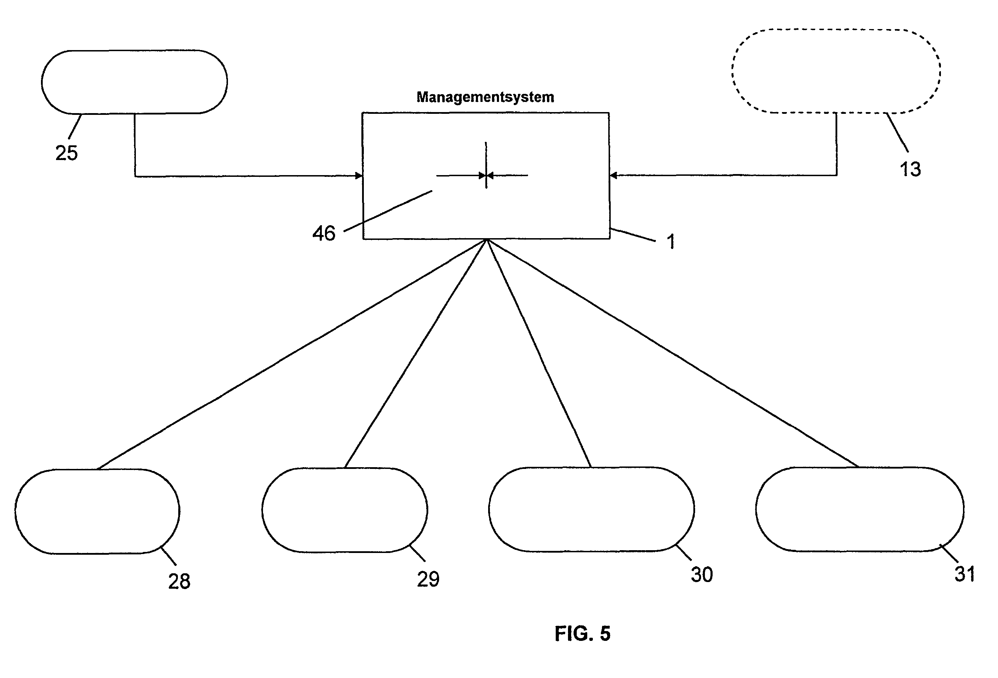

Stimmen diese ebenfalls überein, werden die restlichen Kommunikationsparameter ebenfalls auf Übereinstimmung verglichen. Hundertprozentig übereinstimmende KDS_{S}/ KDS_{A}-Paare werden als Bezugsdatensatzpaare KDS_{S}/KDS_{A} 25 zusammengefaßt und zur weiteren Billingzertifikation verwendet (s. Figur 5).Nicht übereinstimmende Kommunikationsdatensätze werden nach den Datenarten
- Einzel-KDS_{S} oder -KDS_{A} (26) und
- KDS_{S/A}-Paar mit ungleichen Parametern (27)
sortiert und einer weiteren Fehleranalyse im Managementsystem 1 zugeführt (s. Figur 7 und Figur 8).

**Figur 5** zeigt die Verifikation der Kommunikationsdatensätze 13 des zu prüfenden Telekommunikationsnetzes 4, z. B. aus dessen Abrechnungssystem, anhand der erzeugten Bezugsdatensatzpaare 25 des Prüfsystems.
Die Kommunikationsdatensätze 13 des Abrechnungssystem KDS_{ARS} der von der Sende-Antwortstation 2,3 über das TK-System 4 erzeugten Verbindungen werden dem Managementsystem 1 zugeführt z. B. per Datenübertragung über ISDN. Die Kommunikationsdatensätze 13 (KDS_{ARS}) enthalten im wesentlichen folgende Parameter: Rufnummer der Sendestation, Rufnummer der Antwortstation/Zielrufnummer, Datum, Uhrzeit des Kommunikationsbeginns und -dauer, und Kommunikationsdienst; ggf. können noch TK-spezifische Informationen (z. B. TK-Netzidentifikation etc.) darin enthalten sein.

Die automatische Selektion, Zuordnung und der Vergleich (Pos. 46) der KDS_{ARS} 13 mit den KDS_{S/A}-Bezugsdatensatzpaaren 25 erfolgt nach dem gleichen Prinzip wie die Abbildung der Bezugsdatensatzpaare (s. Figur 4).

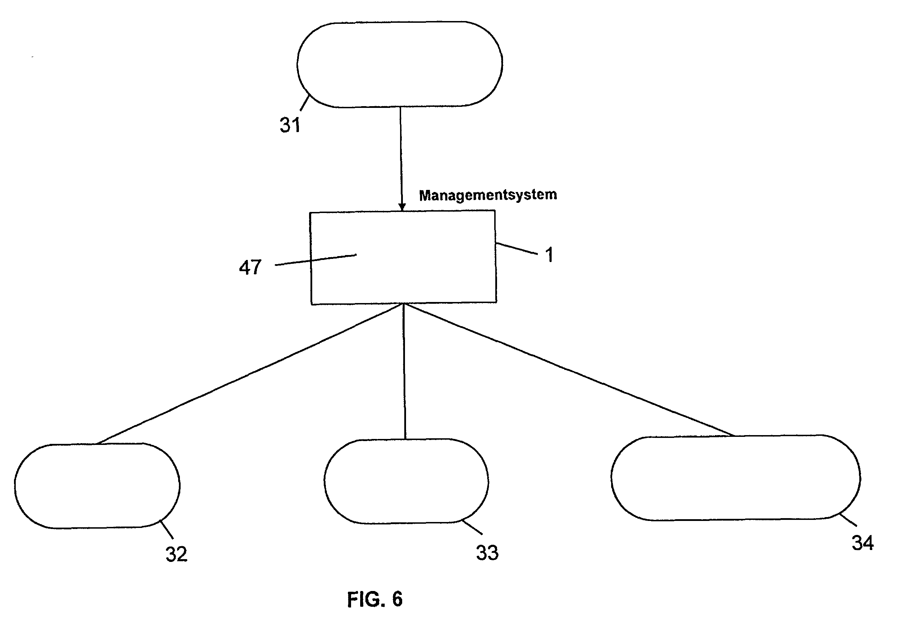

Bei hundertprozentiger Übereinstimmung der KDS_{ARS} 13mit den KDS_{S}/KDS_{A}-Bezugsdatensatzpaaren 25 ist nachgewiesen, daß das TK-System 4 die billingrelevanten Kommunikationsdaten korrekt in den Netzeinrichtungen angelegt und dem Abrechnungssystem 7 ebenfalls korrekt zugeführt hat. Diese Datensätze werden als "korrekte Kommunikatinsdatensätze" in der "Gut-KDS-Datei" 31 abgelegt und der nachfolgenden "Qualitätsbewertung der Kommunikationsbeziehung" (s. Figur 6, Pos. 47) zugeführt.

Kommunikationsdatensätze, die bei oben beschriebener Überprüfung keine vollständige Übereinstimmung erreichen bzw. nicht zuordbar sind, werden nach Ihrem Prüfergebnis in folgende
- Einzel-Bezugsdatensatzpaare KDS_{S}/KDS_{A} ohne KDS_{ARS}, (28)
- Einzel- KDS_{ARS} ohne Bezugsdatensatzpaar KDS_{S}/KDS_{A}, (29)
- KDS_{S}/KDS_{A} und KDS_{ARS} mit ungleichen K-Parametern (30)
abgelegt und einer Fehleranalyse 45 (s. Fig. 7 und 8) zugeführt.

**Figur 6** zeigt die Qualitätsbewertung der korrekten Kommunikationsdatensätze 31.
Hierzu werden die korrekten Kommunikationsdatensätze aus der "Gut-KDS-Datei" 31 im Managementsystem 1 hinsichtlich des im KDS_{S} 10a und KDS_{A} 10b vorhandenen Q-Parameters ausgewertet.

Während der Kommunikationsverbindung zwischen Sende- und Antwortstation 2, 3 werden von beiden Stationen Prüfinformationen gemäß dem in Auftragsfile 9 definierten Prüfmodus der Gegenstation zugesendet, von dieser bewertet und das Ergebnis als Q-Parameter im KDS_{S} 10a bzw. KDS_{A} 10b sowie in ausführlicher detaillierter Form im Prüfinformationslogfile 12 (PiLF) abgespeichert.

Im Prüfmodus sind u. a. Angaben zu
- Gegenstelle eine Antwortstation/ein freies Ziel
- Prüfinformationen senden/empfangen und bewerten
- Art der Verbindungsauslösung (durch Sende-/Antwortstation)
- Art der Prüfinformation (z. B. FSK-moduliertes Dauersignal)
definiert.

Die Bewertung des Empfangs der Prüfinformation (z. B. FSK-moduliertes Dauersignal) wird in das Prüfinformationslogfile 12 geschrieben, dies sind im einfachsten Fall z. B. Angaben wie
- Zeitpunkt Prüfsignal vorhanden
- Zeitpunkt der Prüfsignalunterbrechung
- Zeitpunkt des wiederkehrenden Prüfsignals
   usw. bis zum Verbindungsaufbau.

Das Prüfinformationsfile 12 wird bei der Fehleranalyse ausgewertet (s. Figur 7 und 8).
Aus den so registrierten Ereignissen während der Verbindung wird der Q-Parameter ermittelt aus:
- Anzahl der Unterbrechungen,
- effektive Nutzungsdauer zur Kommunikatonsdauer
- Abbruch-/Auslösgrund der Verbindung
- Anzahl der Handover etc.

Anhand der Bewertung des Q-Parameters des Kommunikationsdatensatzes 10a, 10b der Sende- 2 wie auch der Antwortstation 3 wird vom Managementsystem 1 eine Aussage zur Nutzung des Kommunikationsverbindung getroffen.

Korrekte Kommunikationsdatensätze aus der "Gut-KDS-Datei" 31 für die die Q-Parameter, somit die Verbindung, mit "gut" von beiden Stationen bewertet wurde, werden in die "Gut-Verbindungs-Datei" 34 abgelegt.

Vermittlungsdatensätze mit einer Q-Bewertung
"Verbindung beidseitig (S + A) schlecht" oder
"Verbindung einseitig (S oder A) schlecht
werden in entsprechenden Dateien (32,33) abgelegt und einer Fehleranalyse zugeführt (s. Figur 7 und 8).

**Figur 7** zeigt im Überblick die Struktur der Analyse der fehlerhaften oder unvollständigen Kommunikationsdatensätze.
- Im Managementsystem 1 werden die Kommunikationsdatensätze aus den Dateien
- Einzel-KDS_{S} oder Einzel-KDS_{A} (26)
- KDS_{S/A}-Paar mit ungleichen K-Parametern (27)
- Einzel-Bezugsdatensatzpaar KDS_{S}/KDS_{A} ohne KDS_{ARS} (28)
- Einzel- KDS_{ARS} ohne Bezugsdatensatzpaar KDS_{S}/KDS_{A} (29)
- KDS_{S}/KDS_{A} und KDS_{ARS} mit ungleichen K-Parametern (30)
- Verbindung beidseitig (S + A) schlecht (32)
- Verbindung einseitig (S + A) schlecht (33)
einer automatischen Fehler-Voranalyse unterzogen.

Hierbei werden die Datensätze 26-30, 32, 33 nach vorbestimmten Fehlerbildern (z.B. KDS_{S/A}-Paar mit bestimmten, gleichen K-Parameter-Unstimmigkeiten) bzw. dem Fehlerbild "unbekannt" in Fehlersammler 35 aussortiert, die zu einer Wiederholung dieses Prüffile-Typs führen.
Die KDS der Fehlersammler 35 werden in einer 2. Stufe einer manuellen Fehleranalyse 36 durch einen Operator zugeführt. Hierbei werden die den KDS zugehörigen Signalisierungs- und Prüfinformationslogfiles 11, 12 aus der Sende-Antwortstation 2, 3 durch das Managementsystem 1 abgefordert. Weiterhin werden dem Managementsystem 1 Daten aus dem geprüften TK-System 4 (wie z. B. Verbindungs- und Kommunikationsdatensätze 14, 15 (Aufbau und Inhalt vergleichbar den KDS_{ARS}) oder auch Routinginformationen 16 (Routingtabellen), z. B. Leitweglenkungsinformationen, Verzonungs-/Tarifierungsparameter etc.) zugeführt werden, die eine Präzisierung der Fehleranalyse ermöglichen.

Mit der manuellen Fehleranalyse werden Fehler im TK-System 4 oder auch im Prüfsystem erkannt, z. B. Fehlerursachen/-orte/-symptome.

Weiterhin werden neue Fehlerbilder 39 ermittelt, mit denen neue Fehlersammler 40 eingerichtet werden. Im einfachsten Fall werden aus fehlerhaften oder unvollständigen KDS oder Aufträgen ohne KDS neue Prüffiles 42 generiert.

**Figur 8** stellt den prinzipiellen Ablauf der Qualitätsprüfung der Kommunikationsdatensätze dar.
Ausgehend von dem Auftragsfile 9 werden die vorgegebenen Kommunikationsbeziehungen 43 vom Prüfsystem über das zu prüfende Telekommunikationssystem 4 durchgeführt. Dabei entstehen Kommunikationsdatensätze 10a, 10b, 13 in der Sende-/Antwortstation 2, 3 des Prüfsystems (KDS_{S} /KDS_{A}) sowie im TK-System 4 (KDS_{ARS}). Die erste Prüfstufe ist die Index-Prüfung 21. Hier wird zu dem im Auftragsfile 9 definierten Index der zugehörige Kommunikationsdatensatz 10a der Sendestation (KDS_{S}) gesucht. Nur solche KDS_{S}, zu denen ein Auftrag eindeutig (gleicher Index) zuordbar ist, werden in der Prüfstufe 2 weiter benutzt. Alle anderen Auftragsfiles 9 oder KDS_{S} 10a werden in Dateien 22, 23 zur Fehleranalyse abgelegt.

In der Prüfstufe 2 werden die Bezugsdatensatzpaare 25 gebildet. Aus den KDS_{S} 10a gemäß Auftrag und der KDS_{A} 10b werden nur die KDS ermittelt, die eindeutig zuordbar sind und deren Kommunikationsparameter übereinstimmen. Auch hier werden nicht übereinstimmende KDS_{S} bzw. KDS_{A} in Dateien 26, 27 abgelegt und einer detaillierten Fehleranalyse unterzogen.

Die hundertprozentig übereinstimmenden Bezugsdatensatzpaare 25 (KDS_{S}/KDS_{A}) werden nun als Bezugsgröße der 3. Prüfstufe zugeführt und anhand der Bezugsdatensatzpaare 13 des Telekommunikationsnetzes 4 (z. B. aus dem TK-Abrechnungssystem) KDS_{ARS} verifiziert. Auch hier werden nur eindeutig zuordbare und in den K-Parametern 100% übereinstimmbare KDS_{S}-Triple 31, aus Bezugsdatensatzpaar KDS_{S}/KDS_{A} und KDS_{ARS,} der nächsten Prüfstufe zugeführt; alle anderen KDS werden wiederum in Dateien 28, 29, 30 abgelegt und einer detaillierten Fehleranalyse zugeführt.

Die letzte Prüfstufe konzentriert sich auf die Bewertung des tatsächlichen Nutzens der Kommunikationsverbindung. Die Bezugsdatensatzpaare 25 (KDS_{S}/KDS_{A}), für die auch im TK-System 4 Kommunikationsdatensätze 13 angelegt und im TK/Abrechnungssystem vorhanden sind und 100% in allen billingrelevanten Kommunikationsparametern übereinstimmen, werden nun auf die effektive Nutzbarkeit, während der gesamten Verbindungszeit untersucht.

Hierzu wird der Q-Parameter des KDS_{S} 10a und KDS_{A} 10b ausgewertet. Der Q-Parameter ist ein Maß für die Verfügbarkeit und die Qualität der Verbindung. Nur, wenn beide Q-Parameter (aus KDS_{S} und KDS_{A}) mit dem Wert "Gut" bewertet sind, wird das KDS-Triple 31 in eine "Gut-Verbindungs-Datei" 34 abgelegt. Alle anderen KDS-Triple 31 werden in Dateien 32, 33 abgelegt und der detaillierten Fehleranalyse zugeführt.

Um die Fehleranalyse 45 zu unterstützen und zu optimieren, werden aus dem geprüften TK-System 4 und der Sende-/Antwortstation 2,3 bedarfsweise weitere Daten bzw. Files angefordert. Für das TK-System sind dies u. a. Verbindungs/Kommunikationsdatensätze 14, 15 bzw.. Routinginformationen 16 aus diversen TK-Einrichtungen 5. Aus der Sende- bzw. Antwortstation 2, 3 wird hierfür auf die Signalisierungs- und Prüflogfiles 11, 12 zurückgegriffen.

Aus der Fehleranalyse resultiert die
- Definition neuer Fehlersammler 40 anhand der erkannten Fehlerbilder 39,
- Definition der Fehlerursache/-ort/-symptome im TK-System 4 bzw. Prüfsystem, die zu fehlerhaften, unvollständigen oder fehlenden KDS geführt haben und
- Erstellung neuer Auftragsfiles 42 aufgrund der selektierten Kommunikationsdatensätze

Abschließend werden aus dem Auftragsfile 42, den korrekten Kommunikationsdatensätzen aus der "Gut-KDS-Datei" 31 und aus der "Gut-Verbindungs-Datei" 34 sowie aus dem auf Fehler analysierten KDS 37, 39 diverse Qualitätsreports und Statistiken 48 erstellt.

### Zeichnungslegende

- 1: Managementsystem
- 2: Sendestation
- 3: Antwortstation
- 4: Telekommunikationssystem
- 5: Telekommunikationsanlage
- 6: Routingtabellen
- 7: Abrechnungssystem ARS
- 8: Prüffile
- 9: Auftragsfile
- 10: Kommunikationsdatensätze 10a, 10b
- 11: Signalisierungslogfiles 11 a, 11b
- 12: Prüfinformationslogfiles 12a, 12b
- 13: Kommunikationsdatensätze (ARS)
- 14: Kommunikationsdatensätze (TK-System)
- 15: Verbindungsdatensätze (Tk-System)
- 16: Routingprotokolle (Tk-System)
- 17: Zeitgeber
- 18: Statistisches Auswahlverfahren (TK-System
- 19: Repräsentatives Konzentrat der KDS
- 20: Erzeugung von Prüffiles/Auftragsfiles
- 21: Indexprüfung
- 22: Auftrag ohne KDS_{S}
- 23: KDS_{S} ohne Auftrag
- 24: KDS_{S} gemäß Auftrag
- 25: Bezugsdatensatzpaar KDS_{S}/KDS_{A}
- 26: Einzel-KDS_{S} oder KDS_{A}
- 27: KDS_{S/A}-Paar mit ungleichen K-Parametern
- 28: Einzel-Bezugsdatensatzpaar KDS_{S}/KDS_{A} ohne KDS_{ARS}
- 29: Einzel-KDS_{ARS} ohne Bezugsdatensatzpaar KDS_{S}/KDS_{A}
- 30: KDS_{S}/KDS_{A} und KDS_{ARS} mit ungleichen K-Parametern
- 31: Korrekte Kommunikationsdatensätze
- 32: Verbindung beidseitig (S+A) schlecht
- 33: Verbindung einseitig (S oder A) schlecht
- 34: Verbindung beidseitig (S+A) gut
- 35: Fehlersammler
- 36: Manuelle Fehleranalyse
- 37: Fehler Prüfsystem
- 38: Definition Fehlerursachen/-orte/-sysmptome des Prüfsystems
- 39: Fehler TK-Systeme, neue Fehlerbilder
- 40: Definition neuer Fehlersammler/ Fehlerursache/-ort/-Symptome der TK-Systeme
- 41: Zu wiederholdende Prüffiles
- 42: Erstellung neuer Auftragfiles
- 43: Durchführung der Kommunikationsbeziehung
- 44: Paarweise Zuordnung und Vergleich
- 45: automatische/manuelle Fehleranalyse
- 46: Paarweise Zuordnung und Vergleich
- 47: Qualitäts-Bewertung
- 48: Qualitätsreport und Statistiken

## Patentansprüche

1. Verfahren zum Prüfen eines Telekommunikationssystems (4) in Bezug auf eine korrekte standardmässige Erfassung vom systeminternen Kommunikationsdatensätzen (13,14), **dadurch gekennzeichnet, daß**
a) zwischen zwei Teilnehmerstationen (2,3) des Telekommunikationssystems (4) auf der Basis von vorgegebenen Kommunikationsparametern verschiedene Kommunikationsverbindungen aufgebaut und wieder beendet werden, daß
b) in den beiden Teilnehmerstationen (2,3) eigenständig Kommunikationsdatensätze (10a,10b) von diesen Kommunikationsverbindungen erstellt und abgespeichert werden, und daß
c) die vom Kommunikationssystem (4) selbst standardmässig zu den genannten Kommunikationsverbindungen erfassten Kommunikationsdatensätze (13) mit den von den Teilnehmerstationen (2,3) erstellten Kommunikationsdatensätzen (10a,10b) verglichen werden.

2. Verfahren nach Anspruch 1, **dadurch gekennzeichnet, daß** eine Reihe von statistisch ausgewählte, vom Kunden erzeugte, anonymisierte Kommunikationsdatensätze (13) an ein Managementsystem (1) des Prüfsystems übertragen und dort verarbeitet werden, indem aus diesen Kommunikationsdatensätzen (13) ein statistisch repräsentatives Prüffile (8) bestehend aus einem oder mehreren Kommunikationsaufträgen generiert wird, welches dem Kundenverhalten gleicht, wobei das Prüffile (8) als ein Auftragsfile (9) an eine Sendestation (2) des Prüfsystems übertragen und dort abgearbeitet wird, indem die Sendestation (2) über das zu prüfende Telekommunikationsnetz (4) die durch das Auftragsfile (9) vorgegebenen Verbindungen zu einer Antwortstation (3) aufbaut.

3. Verfahren nach Anspruch 1 oder 2, **dadurch gekennzeichnet, daß** ein netzbetreiber-orientiertes Prüffile (8), bestehend aus einem oder mehreren Kommuniaktionsaufträgen, generiert wird, welches ausgewählt Prüfszenarien enthält, wobei das Prüffile (8) als ein Auftragsfile (9) an eine Sendestation (2) des Prüfsystems übertragen und dort abgearbeitet wird, indem die Sendestation über das zu prüfende Telekommunikationsnetz (4) die durch das Auftragsfile (9) vorgegebenen Verbindungen zu einer beliebigen Antwortstation (3) oder frei bestimmbaren Zielrufnummer aufbaut.

4. Verfahren nach Anspruch 2 oder 3, **dadurch gekennzeichnet, daß** sowohl in der Sende- (2) wie auch der Antwortstation (3) von jeder Verbindung bzw. jedem Verbindungsversuch ein Kommunikationsdatensatz (10a, 10b) erstellt, an das Managementsystem (1) übertragen und dort abgespeichert wird, wobei die Kommunikationsdatensätze (10a) der Sendestation (2) und die Auftragsfiles (9) mit einer Indexprüfung (21) einander zugeordnet werden, und nicht eindeutig zuordbare oder nicht übereinstimmende Kommunikationsdatensätze (10a) bzw. Auftragsfiles (9) in Dateien (22,23) zur weiteren Auswertung gesammelt werden.

5. Verfahren nach einem der Ansprüche 2 bis 4, **dadurch gekennzeichnet, daß** die Kommunikationsdatensätze (10a) der Sendestation (2) mit eindeutig zuordbaren Auftragsfiles (9) und die Kommunikationsdatensätze (10b) der Antwortstation (3) einander zugeordnet und ihre Kommunikationsparameter verglichen werden (44) und unvollständige, fehlerhafte oder nicht zuordbare Kommunikationsdatensätze (10a,10b) in Dateien (26,27) zur weiteren Auswertung gesammelt werden.

6. Verfahren nach einem der Ansprüche 2 bis 5, **dadurch gekennzeichnet, daß** die eindeutig zuordbaren und in ihren Kommunikationsparametern übereinstimmenden Kommunikationsdatensätze (10a, 10b) der Sende- und Antwortstation (2,3) zu Bezugsdatensatzpaaren (25) zusammengefügt werden und zur Verifikation der im Telekommunikationsnetz (4) erzeugten Kommunikationsdatensätze (13) hergenommen werden, wobei die Kommunikationsdatensätze (13) des Telekommunikationsnetzes (4) den Bezugsdatensatzpaaren (25) zugeordnet und ihre Kommunikationsparameter verglichen werden und nicht eindeutig zuordbare oder nicht übereinstimmende Datensätze in Dateien (28-30) zur weiteren Auswertung gesammelt werden.

7. Verfahren nach einem der Ansprüche 2 bis 6, **dadurch gekennzeichnet, daß** zum Aufbau, zur Aufrechterhaltung und zum Abbau der Verbindung zwischen der Sende- und Antwortstation (2,3) und dem Telekommunikationsnetz (4) ausgetauschte Signalisierungsdaten in der Sende- wie auch Antwortstation (2,3) in Logfiles (11a,11b) protokolliert und automatisch oder auf Anforderung an das Managementsystem (1) übertragen werden.

8. Verfahren nach einem der Ansprüche 2 bis 7, **dadurch gekennzeichnet, daß** in den einzelnen Einrichtungen des Telekommunikationsnetzes (4) gespeicherte Kommunikations-, Verbindungsdaten und Routinginformationen automatisch oder auf Anforderung an das Managementsystem (1) übertragen werden.

9. Verfahren nach einem der Ansprüche 2 bis 8, **dadurch gekennzeichnet, daß** nach Aufbau einer Verbindung zwischen Sende- (2) und Antwortstation (3) vordefinierte Prüfinformationen übertragen und in der Gegenstation die Ereignisse der Übertragung in Prüfinformationslogfiles (12a, 12b) protokolliert und automatisch oder auf Anforderung an das Managementsystem (1) übertragen werden.

10. Verfahren nach Anspruch 9, **dadurch gekennzeichnet, daß** aus den Ereignissen der Übertragung der empfangenen Prüfinformationen (12a,12b) in der Sende- (2) wie auch Antwortstation (3) Qualitätsparameter gebildet werden, die in die entsprechenden Kommunikationsdatensätze (10a,10b) der Sende- und Antwortstation eingefügt und mit diesen an das Managementsystem (1) übertragen werden.

11. Verfahren nach einem der Ansprüche 1 bis 10, **dadurch gekennzeichnet, daß** den Kommunikationsdatensätzen (13) des Telekommunikationsnetzes (4) eindeutig zuordbare und in ihren Kommunikationsparametern übereinstimmende Bezugsdatensatzpaare (25) einer Qualitätsbewertung (47) unterzogen werden, wobei Qualitätsparameter der einzelnen Kommunikationsdatensätze (10a,10b) der Sende- wie auch Antwortstation bewertet und nur Bezugsdatensatzpaare mit zwei guten Einzelbewertungen in eine "Gut-Verbindungsdatei" (34) gespeichert werden, wogegen Bezugsdatensätze mit einer oder keiner guten Einzelbewertung in Dateien (32,33) zur weiteren Auswertung gesammelt werden.

12. Verfahren nach einem der Ansprüche 2 bis 11, **dadurch gekennzeichnet, daß** unvollständige, fehlerhafte, nicht zuordbare oder nicht übereinstimmende, in Dateien zur weiteren Auswertung gesammelte Datensätze im Managementsystem (1) einer ersten automatischen Fehler-Voranalyse unterzogen werden, wobei Datensätze mit gleichen Fehlerbildern bzw. mit unbekanntem Fehlerbild in definierten Fehlersammlern (35) zur weiteren Auswertung gesammelt werden.

13. Verfahren nach Anspruch 12, **dadurch gekennzeichnet, daß** in einer manuellen Fehleranalyse (36) nicht zuordbare oder nicht übereinstimmende, in Dateien zur weiteren Auswertung gesammelte Datensätze und die Kommunikationsdatensätze der Fehlersammler (35) mit den entsprechenden Signalisierungs- und Prüflogfiles (11,12) und den in den Einrichtungen im Telekommunikationsnetz erzeugten Kommunikations- und Verbindungsdatensätzen (14,15) wie auch Routinginformationen (16) verglichen und analysiert werden.

14. Verfahren nach Anspruch 13, **dadurch gekennzeichnet, daß** bei der automatischen Fehler-Voranalyse wie auch bei der manuellen Fehleranalyse Datensätze selektiert werden, aus denen neue Auftragsfiles (42) gebildet werden, welche im einfachsten Fall eine Wiederholung der Kommunikation, die zu einem Fehler geführt hat, beinhalten.

15. Verfahren nach einem der Ansprüche 13 und 14, **dadurch gekennzeichnet, daß** nach erstmaligem Ermitteln einer Ursache für einen fehlerhaften Datensatz ein neues Fehlerbild (39) und somit ein neuer Fehlersammler (40) definiert und im Managementsystem eingerichtet wird.

16. Verfahren nach einem der Ansprüche 12,13 oder 15, **dadurch gekennzeichnet, daß** die Fehlersammler (35,40) statistisch ausgewertet werden, um Qualitätsveränderungen des Telekommunikationsnetzes festzustellen.

17. Verfahren nach einem der Ansprüche 1 bis 16, **dadurch gekennzeichnet, daß** die Kommunikations datensätze (10a,10b) vorzugsweise folgende verbindungsrelevanten Parameter enthalten: Rufnummer der Sende- und Antwortstation, Datum, Kommunikationsbeginn/-ende bzw. -dauer und Kommunikationsdienst.

18. Verfahren nach einem der Ansprüche 1 bis 17, **dadurch gekennzeichnet, daß** die Überprüfung der netzeigenen Kommunikationsdatensätze (13) während des regulären Betriebes des Telekommunikationsnetzes (4) erfolgt.

19. Verfahren nach einem der Ansprüche 2 bis 18, **dadurch gekennzeichnet, daß** das Prüffile (8) in frei bestimmbaren Intervallen wiederholt, automatisch oder frei definierbar manuell erstellt wird.

20. Verfahren nach einem der Ansprüche 2 bis 19, **dadurch gekennzeichnet, daß** die Übertragung der Kommunikationsdatensätze (10,13), Protokolle und Files zwischen Managementsystem (1), Netzeinrichtungen/Netzelemente, Abrechnungszentrale (7), Sendestation (2) und Antwortstation (3) über das zu prüfende oder ein weiteres Telekommunikationsnetz (4) erfolgt.

21. Verfahren nach einem der Ansprüche 2 bis 20, **dadurch gekennzeichnet, daß** durch das Managementsystem (1) ein oder mehrere Mobil- und oder Feststationen verwaltet werden, und dort festgelegt wird, wann und welche Mobiloder Feststation als Sende- oder Antwortstation (2,3) arbeitet und mit welcher Gegenstation sie kommuniziert.

22. Verfahren nach einem der Ansprüche 1 bis 21, **dadurch gekennzeichnet, daß** die Sende- und Antwortstation (2,3) durch einen Zeitgeber (17) synchronisiert werden.

23. Vorrichtung zur Durchführung des Verfahrens gemäß der Ansprüche 1 bis 22, **gekennzeichnet durch**:
ein Managementsystem (1) mit einer Einrichtung zum Speichern und Verarbeiten von Daten, Generieren von Prüf-/Auftragsfiles (8,9), und einer Schnittstelle zur Datenkommunikation mit zum prüfenden Telekommunikationssystem (4) kompatiblen Endgeräten und ggf. Einrichtungen;
wenigstens eine Sendestation (2) und eine Antwortstation (3), mit jeweils einem Telekommunikationsendgerät, einer Einrichtung zum Speichern und Verarbeiten von Daten und zur Steuerung des Telekommunikationsendgerätes, eines Zeitgebers (17), und einer Datenschnittstelle zur Kommunikation mit dem Managementsystem (1).

24. Vorrichtung nach Anspruch 23, **dadurch gekennzeichnet, daß** die Sendeund/oder die Antwortstation (2,3) wahlweise Mobil- oder Feststationen sind.

## Claims

1. Method for testing a telecommunication system (4) with respect to correct, standard detection of in-system communication data records (13, 14), **characterised**
a) in that between two subscriber stations (2, 3) of the telecommunication system (4) on the basis of predetermined communication parameters various communication links are set up and ended again,
b) in that in the two subscriber stations (2, 3) independently communication data records (10a, 10b) of these communication links are provided and stored, and
c) in that the communication data records (13) detected by the communication system (4) itself as standard for said communication links are compared with the communication data records (10a, 10b) provided by the subscriber stations (2, 3).

2. Method according to claim 1, **characterised in that** a series of statistically selected communication data records (13) produced by the client and made anonymous are transmitted to a management system (1) of the test system and processed there by generating from these communication data records (13) a statistically representative test file (8) consisting of one or more communication orders which is similar to the client's behaviour, wherein the test file (8) is transmitted as an order file (9) to a transmitting station (2) of the test system and processed there by the transmitting station (2) setting up the links predetermined by the order file (9) to a reply station (3) via the telecommunication network (4) to be tested.

3. Method according to claim 1 or 2, **characterised in that** a network operator-oriented test file (8) consisting of one or more communication orders is generated, which contains selected test scenarios, wherein the test file (8) is transmitted as an order file (9) to a transmitting station (2) of the test system and processed there by the transmitting station setting up the links predetermined by the order file (9) to any reply station (3) or freely definable destination call number via the telecommunication network (4) to be tested.

4. Method according to claim 2 or 3, **characterised in that** both in the transmitting station (2) and in the reply station (3) a communication data record (10a, 10b) of each connection or each attempt at connection is provided, transmitted to the management system (1) and stored there, wherein the communication data records (10a) of the transmitting station (2) and the order files (9) are allocated to each other with an index test (21), and communication data records (10a) or order files (9) which cannot be allocated clearly or do not correspond are collected in files (22, 23) for further evaluation.

5. Method according to one of claims 2 to 4, **characterised in that** the communication data records (10a) of the transmitting station (2) with clearly allocatable order files (9) and the communication data records (10b) of the reply station (3) are allocated to each other and their communication parameters are compared (44), and incomplete, erroneous or non-allocatable communication data records (10, 10b) are collected in files (26, 27) for further evaluation.

6. Method according to one of claims 2 to 5, **characterised in that** the communication data records (10a, 10b) of the transmitting and reply stations (2, 3) which are clearly allocatable and correspond in their communication parameters are combined into pairs of reference data records (25) and taken for verification of the communication data records (13) generated in the telecommunication network (4), wherein the communication data records (13) of the telecommunication network (4) are allocated to the pairs of reference data records (25) and their communication parameters compared, and data records which are not clearly allocatable or do not correspond are collected in files (28-30) for further evaluation.

7. Method according to one of claims 2 to 6, **characterised in that** signalling data exchanged for setting up, maintaining and cutting off the connection between the transmitting and reply stations (2, 3) and the telecommunication network (4) are logged in log files (11a, 11b) in the transmitting and reply stations (2, 3) and transmitted automatically or on request to the management system (1).

8. Method according to one of claims 2 to 7, **characterised in that** communication and connection data and routing information stored in the individual devices of the telecommunication network (4) are transmitted automatically or on request to the management system (1).

9. Method according to one of claims 2 to 8, **characterised in that** after setting up a connection between transmitting (2) and reply stations (3) predefined test information is transmitted, and in the other station the events of transmission are logged in test information log files (12a, 12b) and transmitted automatically or on request to the management system (1).

10. Method according to claim 9, **characterised in that** from the events of transmission of the received test information (12a, 12b) in the transmitting (2) and reply stations (3) are formed quality parameters which are inserted in the appropriate communication data records (10a, 10b) of the transmitting and reply stations and transmitted with them to the management system (1).

11. Method according to one of claims 1 to 10, **characterised in that** pairs of reference data records (25) which are clearly allocatable to the communication data records (13) of the telecommunication network (4) and correspond in their communication parameters are subjected to quality analysis (47), wherein quality parameters of the individual communication data records (10a, 10b) of the transmitting and reply stations are analysed, and only pairs of reference data records with two good individual assessments are stored in a "good connection file" (34), whereas reference data records with one or no good individual assessment are collected in files (32, 33) fur further evaluation.

12. Method according to one of claims 2 to 11, **characterised in that** incomplete, erroneous, non-allocatable or non-corresponding data records collected in files for further evaluation are subjected to a first automatic preliminary error analysis in the management system (1), wherein data records with the same error patterns or with an unknown error pattern are collected in given error collectors (35) for further evaluation.

13. Method according to claim 12, **characterised in that** in a manual error analysis (36) non-allocatable or non-corresponding data records collected in files for further evaluation and the communication data records of the error collectors (35) are compared with the appropriate signalling and test log files (11, 12) and the communication and connection data records (14, 15) generated in the devices in the telecommunication network as well as routing information (16) and analysed.

14. Method according to claim 13, **characterised in that** in the automatic preliminary error analysis as well as in the manual error analysis data records are selected from which are formed new order files (42) which at their simplest contain a repetition of the communication which led to an error.

15. Method according to one of claims 13 and 14, **characterised in that**, after determining for the first time a cause of an erroneous data record, a new error pattern (38) and hence a new error collector (40) are defined and set up in the management system.

16. Method according to one of claims 12, 13 or 15, **characterised in that** the error collectors (35, 40) are statistically evaluated to ascertain changes in quality of the telecommunication network.

17. Method according to one of claims 1 to 16, **characterised in that** the communication data records (10a, 10b) preferably contain the following parameters relevant to connection: call number of transmitting and reply stations, date, beginning/end or duration of communication and communication service.

18. Method according to one of claims 1 to 17, **characterised in that** checking of the network's own communication data records (13) is effected during regular operation of the telecommunication network (4).

19. Method according to one of claims 2 to 18, **characterised in that** the test file (8) is provided repeatedly at freely definable intervals, automatically or manually in a freely definable manner.

20. Method according to one of claims 2 to 19, **characterised in that** transmission of the communication data records (10, 13), logs and files between management system (1), network devices/network elements, accounting centre (7), transmitting station (2) and reply station (3) is effected via the telecommunication network (4) to be tested or a further telecommunication network (4).

21. Method according to one of claims 2 to 20, **characterised in that** one or more mobile and/or fixed stations are managed by the management system (1), and it is stipulated there when and which mobile or fixed station works as a transmitting or reply station (2, 3) and with which other station it communicates.

22. Method according to one of claims 1 to 21, **characterised in that** the transmitting and reply stations (2, 3) are synchronised by a timer (17).

23. Apparatus for carrying out the method according to claims 1 to 22, **characterised by**:
a management system (1) with a device for storing and
processing data, and generating test/order files (8, 9), and an interface for data communication with terminals and
if necessary devices compatible with the telecommunication system (4) to be tested;
at least one transmitting station (2) and one reply station (3), each with a telecommunication terminal, a device for storing and processing data and for control of the telecommunication terminal, a timer (17), and a data interface for communication with the management system (1).

24. Apparatus according to claim 23, **characterised in that** the transmitting station (2) and/or the reply station (3) are optionally mobile or fixed stations.

## Revendications

1. Procédé pour tester un système de télécommunication (4) en ce qui concerne une saisie standard correcte d'enregistrements de communication (13, 14) internes au système, **caractérisé en ce que**
a) différentes liaisons de communication sont établies et terminées entre deux stations d'abonnés (2, 3) du système de télécommunication (4), sur la base de paramètres de communication prédéfinis,
b) des enregistrements de communication (10a, 10b) de ces liaisons de communication sont établis et mis en mémoire de manière autonome dans les deux stations d'abonnés (2, 3), et
c) les enregistrements de communication (13) saisis par le système de communication (4) lui-même de manière standard pour les liaisons de communication sont comparés aux enregistrements de communication (10a, 10b) établis par les stations d'abonnés (2, 3).

2. Procédé selon la revendication 1, **caractérisé en ce qu'**une série d'enregistrements de communication (13) rendus anonymes, générés par le client et sélectionnés statistiquement sont transmis à un système de gestion (1) du système de test et sont traités dans ce système de gestion grâce au fait qu'on génère à partir de ces enregistrements de communication (13) un fichier de test (8) statistiquement représentatif, composé d'un ou plusieurs ordres de communication, qui ressemble au comportement du client, ce fichier de test (8) étant transmis sous la forme d'un fichier d'ordre (9) à une station d'émission (2) du système de test et étant traité dans cette station d'émission (2) grâce au fait que celle-ci établit avec une station de réponse (3), par l'intermédiaire du réseau de télécommunication (4) à tester, les liaisons prédéfinies par le fichier d'ordre (9) .

3. Procédé selon la revendication 1 ou 2, **caractérisé en ce qu'**on génère un fichier de test (8) axé sur l'exploitant du réseau, composé d'un ou plusieurs ordres de communication et contenant des scénarios de test sélectionnés, le fichier de test (8) étant transmis sous la forme d'un fichier d'ordre (9) à une station d'émission (2) du système de test et traité dans cette station d'émission grâce au fait que celle-ci établit avec une station de réponse quelconque (3) ou avec un numéro d'appel apte à être défini librement, par l'intermédiaire du réseau de télécommunication (4) à tester, les liaisons prédéfinies par le fichier d'ordre (9).

4. Procédé selon la revendication 2 ou 3, **caractérisé en ce que**, aussi bien dans la station d'émission (2) que dans la station de réponse (3), un enregistrement de communication (10a, 10b) est établi par chaque liaison ou tentative de liaison, est transmis au système de gestion (1) et est traité dans celui-ci, étant précisé que les enregistrements de communication (10a) de la station d'émission (2) et les fichiers d'ordre (9) sont attribués avec un contrôle d'index (21), et que les enregistrements de communication (10a) ou fichiers d'ordre (9) qui ne sont pas aptes à être attribués de manière univoque ou qui ne coïncident pas sont recueillis dans des fichiers (22, 23) en vue d'une évaluation.

5. Procédé selon l'une des revendications 2 à 4, **caractérisé en ce que** les enregistrements de communication (10a) de la station d'émission (2) avec des fichiers d'ordre (9) aptes à être attribués de manière univoque et les enregistrements de communication (10b) de la station de réponse (3) sont attribués mutuellement, leurs paramètres de communication sont comparés (44) et les enregistrements de communication (10a, 10b) incomplets, incorrects ou inaptes à être attribués sont recueillis dans des fichiers (26, 27) en vue d'une évaluation.

6. Procédé selon l'une des revendications 2 à 5, **caractérisé en ce que** les enregistrements de communication (10a, 10b) des stations d'émission et de réponse (2, 3) qui sont aptes à être attribués de manière univoque et dont les paramètres de communication coïncident sont réunis en paires d'enregistrements de référence (25) et sont utilisés pour vérifier les enregistrements de communication (13) générés dans le réseau de télécommunication (4), étant précisé que les enregistrements de communication (13) du réseau de télécommunication (4) sont attribués aux paires d'enregistrements de référence (25), que leurs paramètres de communication sont comparés et que les enregistrements qui ne sont pas aptes à être attribués de manière univoque ou qui ne coïncident pas sont recueillis dans des fichiers (28-30) en vue d'une évaluation.

7. Procédé selon l'une des revendications 2 à 6, **caractérisé en ce que** pour l'établissement, le maintien et la suppression de la liaison entre les stations d'émission et de réponse (2, 3) et le réseau de télécommunication (4), des données de signalisation échangées sont consignées dans lesdites stations d'émission et de réponse (2, 3) dans des fichiers d'enregistrement (11a, 11b) et sont transmises au système de gestion (1) automatiquement ou à la demande.

8. Procédé selon l'une des revendications 2 à 7, **caractérisé en ce que** les données de communication, les données de liaison et les informations d'acheminement mises en mémoire dans les dispositifs individuels du réseau de télécommunication (4) sont transmises au système de gestion (1) automatiquement ou à la demande.

9. Procédé selon l'une des revendications 2 à 8, **caractérisé en ce que**, après l'établissement d'une liaison entre la station d'émission (2) et la station de réponse (3), des informations de test prédéfinies sont transmises et les événements de la transmission sont consignés dans la station opposée dans des fichiers d'enregistrement d'informations de test (12a, 12b) et transmises au système de gestion (1) automatiquement ou à la demande.

10. Procédé selon la revendication 9, **caractérisé en ce que**, à partir des événements de la transmission des informations de test (12a, 12b) reçues, on forme dans la station d'émission (2) et dans la station de réponse (3) des paramètres de qualité qui sont insérés dans les enregistrements de communication (10a, 10b) correspondants de la station d'émission et de la station de réponse et qui sont transmis avec ceux-ci au système de gestion (1).

11. Procédé selon l'une des revendications 1 à 10, **caractérisé en ce que** les paires d'enregistrements de référence (25) qui sont aptes à être attribuées de manière univoque aux enregistrements de communication (13) du réseau de télécommunication (4) et dont les paramètres de communication coïncident sont soumises à une évaluation de qualité (47), étant précisé que des paramètres de qualité des enregistrements de communication individuels (10a, 10b) de la station d'émission et de la station de réponse sont évalués et que seules les paires d'enregistrements de référence avec deux bonnes évaluations individuelles sont mises en mémoire dans un "bon fichier de liaison" (34) tandis que les enregistrements de référence avec une seule ou aucune bonne évaluation individuelle sont recueillis dans des fichiers (32, 33) en vue d'une évaluation.

12. Procédé selon l'une des revendications 2 à 11, **caractérisé en ce que** les enregistrements incomplets, incorrects, inaptes à être attribués ou ne coïncidant pas qui sont recueillis dans des fichiers en vue d'une évaluation sont soumis dans le système de gestion (1) à une première analyse préalable automatique des erreurs, les enregistrements présentant les mêmes images d'erreurs ou une image d'erreur inconnue étant recueillies dans des collecteurs d'erreurs définis (35) en vue d'une évaluation.

13. Procédé selon la revendication 12, **caractérisé en ce que** dans une analyse d'erreurs manuelle (36), les enregistrements inaptes à être attribués ou ne coïncidant pas qui sont recueillis dans des fichiers en vue d'une évaluation et les enregistrements de communication des collecteurs d'erreurs (35) sont comparés aux fichiers d'enregistrement de signalisation et de test (11, 12) correspondants et aux enregistrements de communication et de liaison (14, 15) générés dans les dispositifs du réseau de télécommunication, ainsi qu'aux informations d'acheminement (16), et sont analysés.

14. Procédé selon la revendication 13, **caractérisé en ce que** lors de l'analyse préalable automatique des erreurs et de l'analyse manuelle des erreurs, on sélectionne des enregistrements à partir desquels on forme de nouveaux fichiers d'ordre (42) qui contiennent dans le cas le plus simple une répétition de la communication qui a entraîné une erreur.

15. Procédé selon l'une des revendications 13 et 14, **caractérisé en ce que**, après avoir déterminé pour la première fois une cause pour un enregistrement incorrect, on définit une nouvelle image d'erreur (39) et, ainsi un nouveau collecteur d'erreurs (40) qu'on installe dans le système de gestion.

16. Procédé selon l'une des revendications 12, 13 ou 15, **caractérisé en ce qu'**on évalue statistiquement les collecteurs d'erreurs (35, 40) pour constater les variations de qualité du réseau de télécommunication.

17. Procédé selon l'une des revendications 1 à 16, **caractérisé en ce que** les enregistrements de communication (10a, 10b) contiennent de préférence ces paramètres importants pour la liaison : numéro d'appel de la station d'émission et de la station de réponse, date, début/fin ou durée de la communication et service de communication.

18. Procédé selon l'une des revendications 1 à 17, **caractérisé en ce que** la vérification des enregistrements de communication (13) propres au réseau se fait pendant le fonctionnement régulier du réseau de télécommunication (4).

19. Procédé selon l'une des revendications 2 à 18, **caractérisé en ce que** le fichier de test (8) est établi de manière renouvelée suivant des intervalles aptes à être définis librement, automatiquement ou manuellement d'une manière apte à être définie librement.

20. Procédé selon l'une des revendications 2 à 19, **caractérisé en ce que** la transmission des enregistrements de communication (10, 13), des protocoles et des fichiers entre le système de gestion (1), les dispositifs/éléments de réseau, le centre de facturation (7), la station d'émission et la station de réponse (3) se fait par l'intermédiaire du réseau de télécommunication (4) à tester ou d'un autre réseau de télécommunication.

21. Procédé selon l'une des revendications 2 à 20, **caractérisé en ce qu'**une ou plusieurs stations mobiles et/ou fixes sont gérées grâce au système de gestion (1) et on détermine au niveau de celui-ci quand et quelle station mobile ou fixe fonctionne comme station d'émission ou de réponse (2, 3) et avec quelle station opposée elles communiquent.

22. Procédé selon l'une des revendications 1 à 21, **caractérisé en ce que** la station d'émission et la station de réponse (2, 3) sont synchronisées grâce à une horloge.

23. Dispositif pour mettre en oeuvre le procédé des revendications 1 à 22, **caractérisé par** :
un système de gestion (1) avec un dispositif pour mettre en mémoire et traiter des données et générer des fichiers de test/d'ordre (8, 9) et une interface pour la communication de données avec des terminaux et éventuellement des dispositifs compatibles avec le système de télécommunication (4) à tester ;
au moins une station d'émission (2) et une station de réponse (3) avec chacune un terminal de télécommunication, un dispositif pour mettre en mémoire et traiter des données et pour commander le terminal de télécommunication et une horloge (17), et une interface de données pour la communication avec le système de gestion (1).

24. Dispositif selon la revendication 23, **caractérisé en ce que** les stations d'émission et/ou de réponse (2, 3) sont des stations mobiles ou fixes, au choix.
